# EUROPEAN PATENT APPLICATION

(11) **EP 0 973 123 A1**
(43) Date of publication of application: **19.01.2000**
(21) Application number: 99305336.2
(22) Date of filing: 06.07.1999
(51) Int. Cl.: G06K 11/18, G06F 3/033

(54) **Finger sensor operating technique**

(30) Priority: 17.07.1998 US 118988
(71) Applicant: LUCENT TECHNOLOGIES INC., Murray Hill, New Jersey 07974-0636 (US)
(72) Inventor: Inglis, David Andrew, Holmdel, New Jersey 07733 (US)
(74) Representative: Johnston, Kenneth Graham

(57) **Abstract**

The functionality of a touchpad and fingerprint sensor into a single sensor. This is achieved by using a conventional high resolution finger detecting sensor, such as a capacitive sensor, coupled to a processor running appropriate software which performs either fingerprint operations or finger motion detection as a function of the application required to be performed at any particular time by a user. More specifically, in a first mode for performing fingerprint operations, the software interacts with the capacitive sensor to obtain a fingerprint "image", if there is a finger in contact with the sensor, and to process the fingerprint images, such as analyzing it to detect patterns, storing the fingerprint image, or comparing the fingerprint image against other stored fingerprint images. a second mode, for performing finger motion detection, the software obtains successive fingerprint images and analyzes them to detect direction of motion and amount of motion, e.g., by identifying particular features of the fingerprint and determining their location in each of the successive fingerprint images. Advantageously, a savings in both cost and space required is achieved with respect to the prior art systems.

## Description

### Technical Field

This invention relates to the art of sensors which detect information about fingers.

### Background of the Invention

In the prior art it is well known that low resolution sensors, e.g., capacitive-type sensors, can be used as trackpads or touchpads, i.e., sensors that track the movement of a finger and convert the motion into information useable by a computer. It is further known that high resolution sensors, e.g., capacitive or optical-type sensors, can be used to detect the ridges and valleys of fingerprints, and which enables information as to the minutia, which are the identifying features of the fingerprints, to be available in a computer useable format, so that identification of the person whose finger is being sensed may be achieved.

### Summary of the Invention

I have recognized that in the prior art different technologies are used for the motion sensing touchpads and for the fingerprint information sensing. As a result, to perform both functions, in the prior art, two distinct sensors, and their respective corresponding systems, are necessary. As a result, the performance of both functions in the prior art is costly, and it also takes up additional space beyond that which is necessary for the performance of only one of the functions. The need for such extra space is especially disadvantageous in mobile devices as space in such devices is often at a premium.

These disadvantages of the prior art are avoided by combining, using a single sensor, the functionality of a touchpad and fingerprint sensor. This is achieved by using a conventional high resolution sensor, such as a capacitive-type sensor, optical-type sensor, or any conventional finger detecting sensor, coupled to a processor running appropriate software which performs either fingerprint operations or finger motion detection as a function of the application required to be performed at any particular time by a user. More specifically, in a first mode for performing fingerprint operations, the software interacts with the high resolution sensor to obtain a fingerprint "image", e.g., the ridges and valleys of the finger, if there is a finger in contact with the sensor, and to process the fingerprint images in a manner consistent with fingerprint functionality, such as analyzing it to detect patterns, storing the fingerprint image, or comparing the fingerprint image against other stored fingerprint images. In a second mode, for performing finger motion detection, the software obtains successive fingerprint images and analyzes them to detect direction of motion and amount of motion, e.g., by identifying particular features of the fingerprint and determining their location in each of the successive fingerprint images. Advantageously, a savings in both cost and space required to perform both motion sensing and fingerprint analysis is achieved with respect to the prior art systems.

### Brief Description of the Drawing

In the drawing:
FIG. 1 shows an exemplary system arranged in accordance with the principles of the invention;
FIG. 2 shows an exemplary prior art capacitive sensor for detecting fingerprints; and
FIG. 3 shows an exemplary process for employing the system of FIG. 1 to perform both fingerprint operations or finger motion detection in accordance with the principles of the invention.

### Detailed Description

The following merely illustrates the principles of the invention. It will thus be appreciated that those skilled in the art will be able to devise various arrangements which, although not explicitly described or shown herein, embody the principles of the invention and are included within its spirit and scope. Furthermore, all examples and conditional language recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

Thus, for example, it will be appreciated by those skilled in the art that the block diagrams herein represent conceptual views of illustrative circuitry embodying the principles of the invention. Similarly, it will be appreciated that the various flow charts, flow diagrams, state transition diagrams, pseudocode, and the like represent various processes which may be substantially represented in computer readable medium and so executed by a computer or processor, whether or not such computer or processor is explicitly shown.

The functions of the various elements shown in the FIGs., including functional blocks labeled as "processors" may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, read-only memory (ROM) for storing software, random access memory (RAM), and non-volatile storage. Other hardware, conventional and/or custom, may also be included. Similarly, any switches shown in the FIGS. are conceptual only. Their function may be carried out through the operation of program logic, through dedicated logic, through the interaction of program control and dedicated logic, or even manually, the particular technique being selectable by the implementor as more specifically understood from the context.

In the claims hereof any element expressed as a means for performing a specified function is intended to encompass any way of performing that function including, for example, a) a combination of circuit elements which performs that function or b) software in any form, including, therefore, firmware, microcode or the like, combined with appropriate circuitry for executing that software to perform the function. The invention as defined by such claims resides in the fact that the functionalities provided by the various recited means are combined and brought together in the manner which the claims call for. Applicant thus regards any means which can provide those functionalities as equivalent as those shown herein.

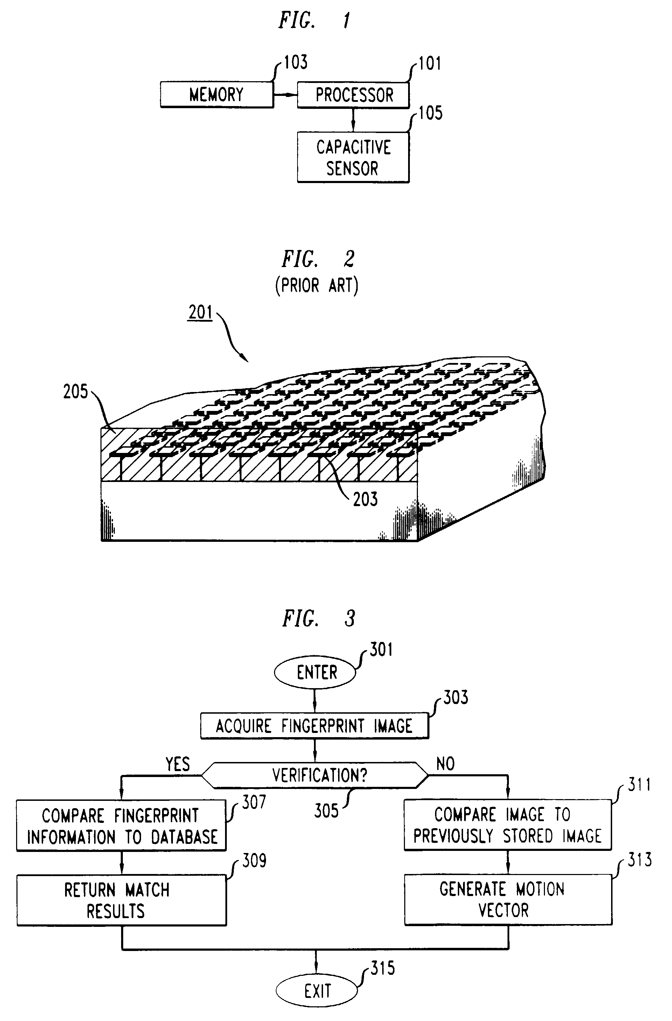

FIG. 1 shows an exemplary system arranged in accordance with the principles of the invention. Shown in FIG. 1 are processor 101, memory 103 and sensor 105.

Processor 101 executes various software modules, which may be stored in memory 103.

Memory 103 stores software modules for execution by processor 101, as well as other information, such as fingerprint images captured by sensor 105 or other stored fingerprint images. Additionally, or in the alternative, memory 103 may store information regarding specific features which are identified, or extracted, e.g., by processor 101 or another processor (not shown), from a fingerprint image. Memory 103 may include both long and short term memory, as well as volatile or non-volatile memory, and also include a component at a remote location, e.g., accessible over a communications network, in any combination desired by an implementor.

Sensor 105 is a high resolution sensor suitable for detecting the ridges and valleys of fingerprints to a resolution that permits minutia, which are the identifying features of the fingerprints, to be determined using conventional computer fingerprint analysis techniques. Thus, sensor 105 may be a capacitive-type sensor, an optical type sensor, or any conventional finger detecting sensor.

For example, FIG. 2 shows an exemplary prior art capacitive sensor for detecting fingerprints which may be used as sensor 105 (FIG. 1). More specifically FIG. 2 shows a topological sensor 201 that contains an array of sensing elements 203. The individual sensing elements 203 typically have dimensions smaller than the item under investigation. When used as a fingerprint sensor, the sensing elements should have dimensions that are smaller than the ridges and valleys of a finger. Disposed above the sensing elements is a suitable insulating material such as glass or plastic, for example, which serves as a sensing surface 205. This sensor is more fully described in United States Patent Application Serial No. 08/57310, which in incorporated by reference as if fully set forth herein.

FIG. 3 shows an exemplary process for employing the system of FIG. 1 to perform both fingerprint operations and finger motion detection in accordance with the principles of the invention. The process shown in FIG. 3 is typically performed by an operating system executing on a processor, e.g., processor 101 (FIG. 1), in response to requests from a similarly executing application program or the operating system itself. Thus, typically, the particular function to be performed using sensor 105 will be set by the current application program and communicated to the operating system.

The process is entered in step 301 (FIG. 3) when it is determined that either a fingerprint needs to be obtained, such as may be required for an identity verification for a security application, or when it is necessary to determine if a user's finger has moved on sensor 105, so that a cursor location, or motion dependent information, can be updated. Next, in step 303, a fingerprint image, i.e., the pattern of ridges and valleys of a finger, is acquired by sensor 105. Note that if no finger is in contact with sensor 105 the image will be blank. Thereafter, conditional branch point 305 tests to determine if sensor 105 is being used to perform verification of the user's identity.

If the test result in step 305 is YES, indicating that sensor 105 is being used to perform verification of the user's identity, control passes to step 307, in which the acquired fingerprint image is compared against a database of fingerprint information. This comparison may be achieved a) by directly comparing the acquired fingerprint image against stored fingerprint images in the database; b) by comparing information derived from the acquired fingerprint image such as, minutia, which includes whorls, loops, bifurcations and the like, against information stored in the database that was derived from other finger prints; or c) any combination thereof. In step 309, the results of the comparison are set for return to the program which called the process of FIG. 3. For example, if a match is found, an indication may be returned indicating either only that a match was found or an indication may be returned which sets forth the particular party with which the match was found. On the other hand, if a match is not found, a null result may be returned. The process then exits in step 315.

If the test result in step 305 is NO, indicating that sensor 105 is being used to detect finger motion over its surface, control passes to step 311, in which the fingerprint image just acquired in step 303 is compared with information from at least one previously acquired fingerprint images. This comparison may be achieved a) by directly comparing the acquired fingerprint image against the previously acquired fingerprint image; b) by comparing information derived from the acquired fingerprint image such as, the edges of the finger or minutia, which includes whorls, loops, bifurcations and the like, against similar information that was derived from the previously acquired fingerprint image; or c) any combination thereof. Any conventional form of image processing may be used for performing the comparison. In step 313, a motion vector is formed as a result of the comparison and is returned in step 311. The motion vector indicates the relative motion with respect to the last detected position of the finger. Note that relative motion may encompass both direction of motion and amount of motion. The process then exits in step 315.

When finger motion is being detected by sensor 105, it is possible to detect a tapping by the user on sensor 105 This is achieved by detecting first the presence of a finger on sensor 105, then its absence, and then its presence again, all within prescribed times, as will be appreciated by those of ordinary skill in the art. Similarly, with regard to detecting finger motion, if the finger is removed from sensor 105, the location against which relative motion may be determined is reset once the finger again touches sensor 105.

Note that the process in FIG. 3 may be called repeatedly to smoothly detect finger motion over the surface of sensor 105, e.g. for use in controlling a cursor or a drawing tool. Similarly, the process in FIG. 3 may be called whenever an verification of the identity of the user is required, e.g., when logging on to a computer system, computer network, or when making financial transactions.

Instead of incorporating the software within the operating system, such software may be incorporated within particular application programs. Additionally, the comparison software, such as is called for in step 307, may be performed by an external processor, e.g., using a connection over a computer network.

For detecting motion, a finger may not itself actually be required. Instead, another sensable surface, may be moved over the surface of sensor 105. Such a surface may be arranged to have constrained motion over the surface of sensor 105.

## Claims

1. A method for use with a processor coupled to a sensor capable of acquiring a fingerprint image comprising the steps of:
acquiring a first fingerprint image;
in a first mode of operation of said processor, comparing said acquired fingerprint image against other stored fingerprint information; and
in a second mode of operation of said processor, acquiring a second fingerprint image and determining motion of a finger whose image is acquired as said first and second fingerprint images.

2. Apparatus, comprising:
a sensor for detecting ridges and valleys of a fingerprint;
a processor, coupled to said sensor, for comparing a fingerprint detected by said sensor with a prestored fingerprint to determine either a similarity of said detected fingerprint to said prestored fingerprint or a motion of said detected fingerprint with respect to said prestored fingerprint.

3. A method for use with a portable device including a sensor for detecting ridges and valleys of a fingerprint and a processor, comprising:
obtaining a fingerprint image by said sensor;
comparing said obtained fingerprint image with a prestored fingerprint image;
wherein, in a first mode, said comparing step functions to determine a similarity of said obtained fingerprint to a prestored fingerprint and in a second mode said comparing step functions to determine a motion of said obtained fingerprint with respect to said prestored fingerprint.

4. The method as defined in claim 1 or 3, wherein said comparing step is performed by comparing feature information extracted from said acquired fingerprint image against feature information of said stored fingerprint information.

5. The method as defined in claim 1 or 3 wherein said comparing step is performed using image processing.

6. The method as defined in claim 1 or 3, or the apparatus of claim 2 wherein said sensor capable of acquiring a fingerprint image is either a capacitive sensor, or an optical sensor, or a high resolution sensor.

7. The method as defined in claim 1 or 3, further including the step of:
in a third mode of operation, either storing said acquired fingerprint image for substantially long term use, or storing said acquired fingerprint image in a substantially non-volatile storage for long term use as part of said other stored fingerprint information, or extracting feature information from said acquired fingerprint image for substantially long term use; and
storing said extracted feature information for substantially long term use, or extracting feature information from said acquired fingerprint image for substantially long term use; and
storing said extracted feature information for substantially long term use in a substantially non-volatile storage.

8. Apparatus, comprising:
means for detecting ridges and valleys of a fingerprint;
means, coupled to said sensor, for comparing a fingerprint detected by said sensor with a prestored fingerprint to determine either a similarity of said detected fingerprint to said prestored fingerprint or a motion of said detected fingerprint with respect to said prestored fingerprint.

9. The apparatus as defined in claim 8 or the method of claim 3, wherein said prestored fingerprint is stored in either long-term memory, or in short-term memory.

10. The method as defined in claim 3, wherein in said first mode said prestored fingerprint is stored in long-term memory and in said second mode said prestored fingerprint is stored in short-term memory.

11. The method as defined in claim 10, wherein said comparing step is performed using information derived from said obtained fingerprint image and said prestored fingerprint image.

12. The A method for use with a processor coupled to a sensor capable of acquiring a fingerprint image comprising the steps of:
acquiring information relating to a first fingerprint image;
in a first mode of operation of said processor, comparing said acquired fingerprint information against other stored fingerprint information; and
in a second mode of operation of said processor, acquiring information relating to a second fingerprint image and determining motion of a finger whose image is acquired as said first and second fingerprint images.

13. A method for use with a portable device including a sensor for detecting ridges and valleys of a fingerprint and a processor, comprising:
obtaining information relating to a fingerprint image using said sensor;
comparing said obtained fingerprint information with a prestored fingerprint information;
wherein, in a first mode, said comparing step functions to determine a similarity of said obtained fingerprint information to prestored fingerprint information and in a second mode said comparing step functions to determine a motion of a finger generating said obtained fingerprint information with respect to said prestored fingerprint information.
